# EUROPEAN PATENT APPLICATION

(11) **EP 4 704 273 A2**
(43) Date of publication of application: **04.03.2026**
(21) Application number: 25196122.3
(22) Date of filing: 14.08.2025
(51) Int. Cl.: H02G 3/04, H02G 9/02, F16L 57/00, H02G 1/10, H02G 9/06

(54) **CABLE PROTECTION SYSTEM USING COUPLING FASTENERS**

(30) Priority: 26.08.2024 US 202463687031 P; 02.07.2025 US 202519257776
(71) Applicant: Panduit Corp., Tinley Park, Illinois 60487 (US)
(72) Inventor: BASKERVILLE, Steven J., Illinois, 60487 (US); MIZE, Noah C., Illinois, 60487 (US); ROULEAU, Rodney G., Illinois, 60487 (US); SIMS, Gabriela R., Illinois, 60487 (US); SUN, Jian, Illinois, 60487 (US)
(74) Representative: Roberts, Gwilym Vaughan

(57) **Abstract**

A cable protection system is provided that includes mating features for enabling efficient and effective assembly around a cable to be protected.

## Description

### CROSS-REFERENCE TO RELATED APPLICATION(S)

This application claims benefit to U.S. Provisional Patent Application No. 63/687,031, filed on August 26, 2024, the entirety of which is hereby incorporated by reference herein.

### TECHNICAL FIELD

The application relates to a cable protection system for protecting cables from harsh environmental conditions such as subsea applications, as well as coupling fasteners that are included in the cable protection system. For instance, the cable protection system may include two half sleeves being used to cover the cables, where the coupling fasteners are used to hold the two half sleeves together.

### BACKGROUND

Offshore energy production has been around for decades and until recently it has been typically related to oil and gas production. However, more recently renewable energy sources are becoming more common and offshore installations are popular in areas where available land may be too expensive or not available. Regardless of the type of offshore installation, power and data transmission is being implemented by utilizing subsea cables for the transmission of the power and data. The subsea cables used for offshore installations may be protected from abrasion, sharp objects, kinks, and other environmental issues that may degrade the integrity of the cables. Known cable protection systems may utilize a segmented bell and ball cast iron system. This style of protective sleeve has proven to be effective at protecting the cables and may be preferable for certain types of installations. However, the bell and ball cast iron system has several weaknesses such as the cast iron being heavy, which results in increased time and resources to install, as well as the cast iron material itself having the limitation of a limited lifespan in salt water and worker safety issues due to its heavy and bulky nature.

### SUMMARY

Disclosed herein are cable protection systems and methods for assembling such cable protection systems. The cable protection systems include coupling fastener features for enabling a more efficient and effective installation process.

According to some embodiments, a cable protection system is disclosed. The cable protection system comprising a first half sleeve, a second half sleeve configured to mate with the first half sleeve to form a mated sleeve, the mated sleeve including an internal cavity for holding a cable, a first coupling band fastener, and a second coupling band fastener configured to mate with the first coupling band fastener around the mated sleeve.

According to some embodiments, a cable protection system is disclosed. The cable protection system comprising a first half sleeve including a first coupling band fastener embedded within the first half sleeve, and a second half sleeve including a second coupling band fastener embedded within the second half sleeve, the second half sleeve configured to mate with the first half sleeve by mating the first coupling band fastener to the second coupling band fastener, wherein the mated first half sleeve and the second half sleeve form a mated sleeve including an internal cavity for holding a cable.

According to some embodiments, a cable protection system is disclosed. The cable protection system comprising a first half sleeve including a male coupling fastener, and a second half sleeve including a female coupling fastener, the second half sleeve configured to mate with the first half sleeve by mating the male coupling fastener to the female coupling fastener, wherein the mated first half sleeve and the second half sleeve form a mated sleeve including an internal cavity for holding a cable.

A detailed description of these and other non-limiting exemplary embodiments of the cable protection systems is set forth below together with accompanying drawings.

### BRIEF DESCRIPTION OF THE DRAWINGS

FIG. 1 is a perspective view of an exemplary cable protection system including coupling band fasteners, according to a first embodiment of the present disclosure.
FIG. 2 is a perspective view of a coupling band fastener included in the cable protection system shown in FIG. 1, according to some embodiments of the present disclosure.
FIG. 3 is a perspective view of a female end of the coupling band fastener shown in FIG. 2, according to some embodiments of the present disclosure.
FIG. 4 is a perspective view of the coupling band fastener shown in FIG. 2, prior to the female end being attached, according to some embodiments of the present disclosure.
FIG. 5 is a perspective view of the coupling band fastener being mated with another coupling band fastener, according to some embodiments of the present disclosure.
FIG. 6 is a perspective view of a coupling band fastener including inside barbs being mated to another coupling band fastener including inside barbs, according to a second embodiment of the present disclosure.
FIG. 7 is a semi-transparent perspective view of a cable protection system including internal coupling bands, according to a third embodiment of the present disclosure.
FIG. 8 is a perspective view of the cable protection system including internal coupling bands from FIG. 7, according to the third embodiment of the present disclosure.
FIG. 9 is a perspective view of a female coupling anchor for embedding within a half sleeve included in a cable protection system, according to a fourth embodiment of the present disclosure.
FIG. 10 is a perspective view of a male coupling anchor for mating with the female coupling anchor shown in FIG. 9, the male coupling anchor also being for embedding within a half sleeve included in a cable protection system, according to the fourth embodiment of the present disclosure.
FIG. 11 is a perspective view of the female coupling anchor from FIG. 9 and the male coupling anchor from FIG. 10 in a mated state, according to the fourth embodiment of the present disclosure.
FIG. 12 is a semi-transparent view of a portion of the cable protection system that includes the female coupling anchor from FIG. 9 and the male coupling anchor from FIG. 10, according to the fourth embodiment of the present disclosure.
FIG. 13 is a perspective view of a female coupling anchor for embedding within a half sleeve included in a cable protection system, according to a fifth embodiment of the present disclosure.
FIG. 14 is a perspective view of a male coupling anchor for mating with the female coupling anchor shown in FIG. 13, the male coupling anchor also being for embedding within a half sleeve included in a cable protection system, according to the fifth embodiment of the present disclosure.

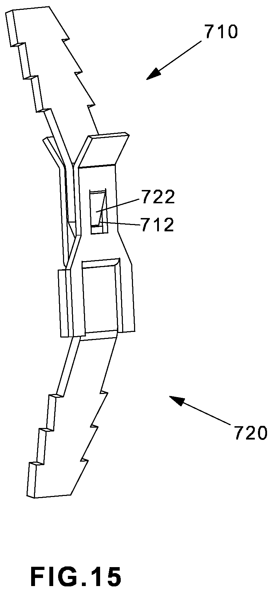

FIG. 15 is a perspective view of the female coupling anchor from FIG. 13 and the male coupling anchor from FIG. 14 in a mated state, according to the fifth embodiment of the present disclosure.
FIG. 16 is a semi-transparent view of a portion of the cable protection system that includes the female coupling anchor from FIG. 13 and the male coupling anchor from FIG. 14, according to the fifth embodiment of the present disclosure.
FIG. 17 is a perspective view of a half-length half sleeve included in a cable protection system, where the half-length half sleeve may be installed as a first step in an installation process, according to embodiments of the present disclosure.
FIG. 18 is a perspective view of a full-length half sleeve installed onto the half-length half sleeve from FIG. 17, where the installation of the full-length half sleeve onto the half-length half sleeve ensures an offset for subsequently installed full-length half sleeves in the cable protection system, according to embodiments of the present disclosure.
FIG. 19 is a perspective view of another full-length half sleeve installed onto the cable protection system assembled from FIG. 17, where the subsequently installed full-length half sleeves in the cable protection system will form an offset, according to embodiments of the present disclosure.

### DETAILED DESCRIPTION

As required, detailed non-limiting embodiments are disclosed herein. However, it is to be understood that the disclosed embodiments are merely exemplary and may take various and alternative forms. The figures are not necessarily to scale, and features may be exaggerated or minimized to show details of particular components. Therefore, specific structural and functional details disclosed herein may not be interpreted as limiting, but may merely be a representative basis for teaching one skilled in the art.

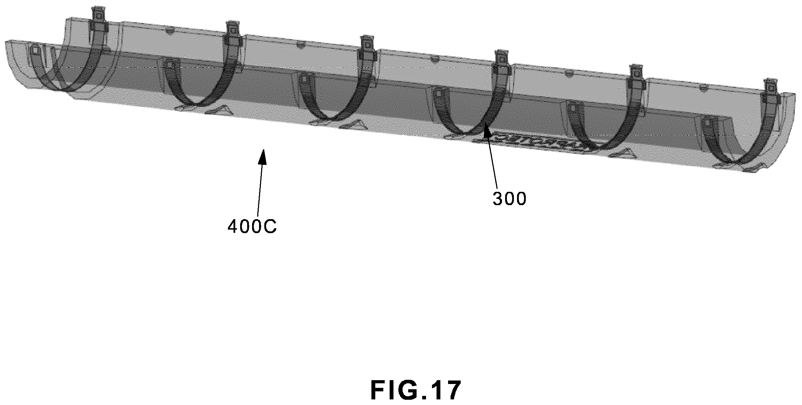

Disclosed herein are novel cable protection systems including coupling fasteners, and methods for installing such cable protection systems, that offer improved installation efficiency and effectiveness over previously known cable protection systems. The cable protection systems described herein may include a top row of half sleeves, and a bottom row of half sleeves, where the top row half sleeves are mated to the bottom row half sleeves using the coupling fasteners as described in the different embodiments described herein. Furthermore, description of the half sleeves may be primarily referencing full-length half sleeves, with the exception of a specific description of a half-length half sleeve. The half-length half sleeve may be used to start and/or finish an installation of the cable protection systems to enable an offset of the full-length half sleeves when assembling the cable protection systems described herein, according to the different embodiments. A description of an exemplary installation assembling process is provided with reference to FIGs. 17-19.

According to some embodiments, the half sleeves comprising the cable protection systems described herein may be manually installed to cover and protect a cable intended for installation in environmentally challenging locations such as subsea installations. According to other embodiments, the half sleeves comprising the cable protection systems described herein may be installed, at least in part, using a mechanical machine including an assembly line for covering and protecting cable as it travels along the assembly line. The half sleeves that comprised the cable protection systems described herein may be made from a polyurethane, urethane, or other similar moldable material. According to some embodiments, portions of the half sleeves may include metal components. For example, the coupling fasteners described herein may be metal components that are embedded within certain portions of the half sleeves to provide, according to some embodiments. Metal components may further be added to provide additional structural stability, and/or increase weight of the half sleeves.

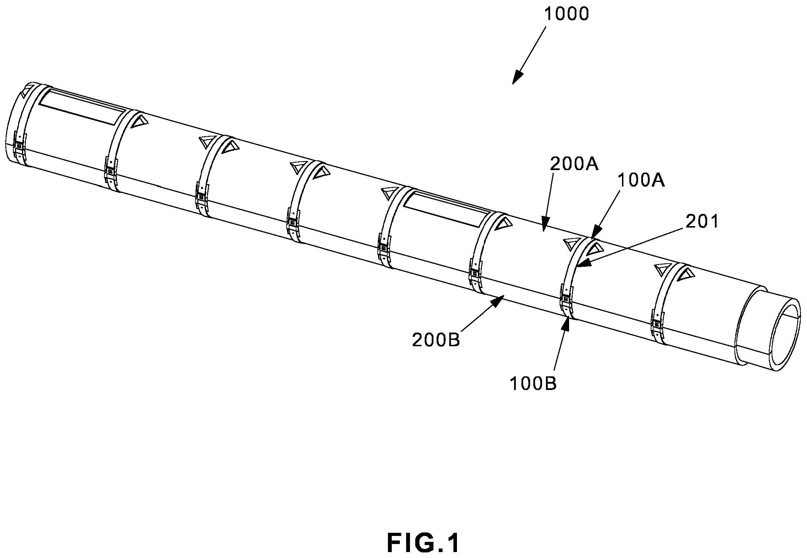

FIG. 1 shows an exemplary cable protection system 1000 according to a first exemplary embodiment of this disclosure. The cable protection system 1000 will include a top row of half sleeves 200A, and a bottom row of half sleeves 200B, where the top row half sleeves 200A are the same design as the bottom row half sleeves 200B. In the cable protection system 1000, each of the half sleeves 200A, 200B include channels 201 that will line up to form an indented space. A pair of coupling bands 100A, 100B may be mated together within these channels to assist in holding the top row half sleeves 200A and bottom row half sleeves 200B together.

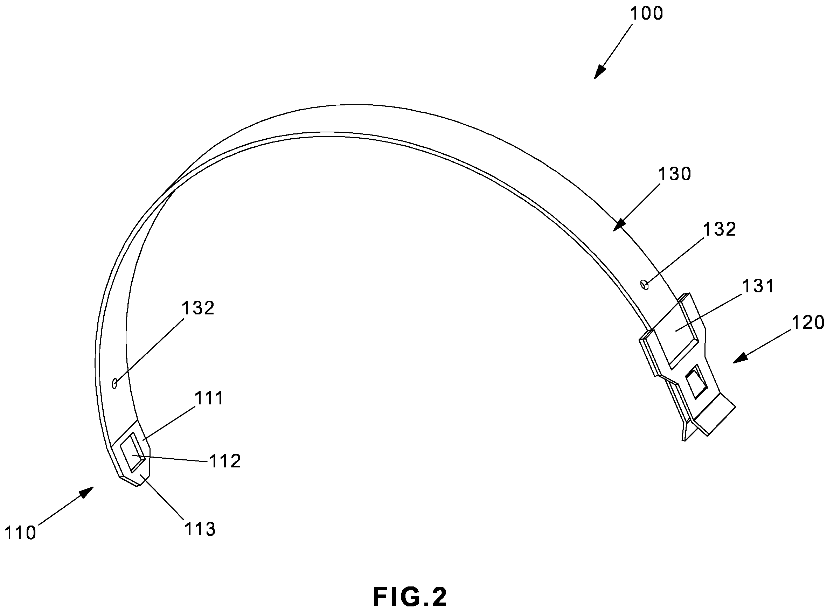

FIG. 2 shows a perspective view of one of these coupling bands 100 from the cable protection system 1000. The coupling band 100 includes a male end 110, a female end 120, and a band body 130. The band body 130 includes a welding pad 131 and fastener holes 132. The male end 110 includes a male body 111 portion, and a tapered entry tip 113, and a lock window 112 opening. The lock window 112 provides a cavity for a locking tab 122 on the female end 120 to fall into to form a mated structure.

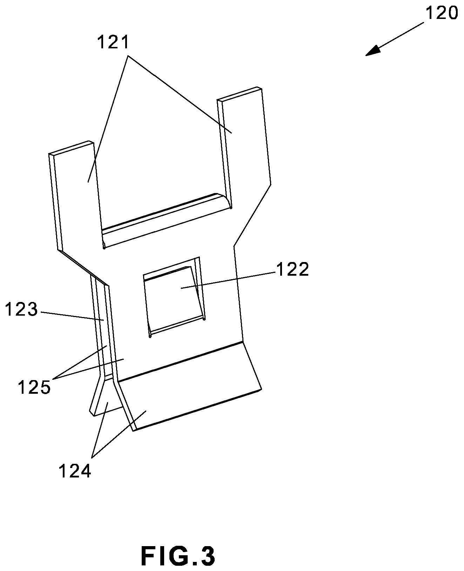

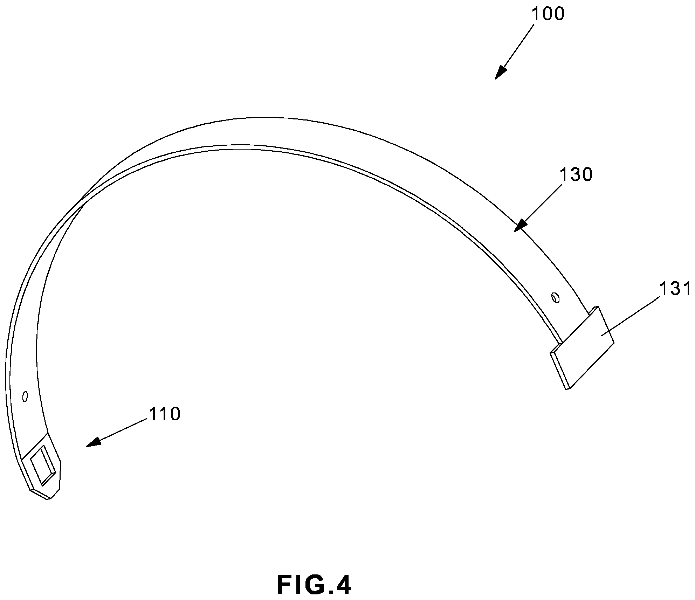

FIG. 3 shows a perspective view of the female end 120 alone that includes body welding tabs 121 for spot welding the female end 120 to the welding pad 131 of the band body 130. The female end 120 also includes a locking tab 122, a coupling chamber 123 defined by two female body walls 125, and a pair of guide flanges 124 that are formed to flare out from a distal end of the body walls 125. FIG. 4 shows a perspective view of the coupling band 100 prior to the female end being welded onto the welding pad 131.

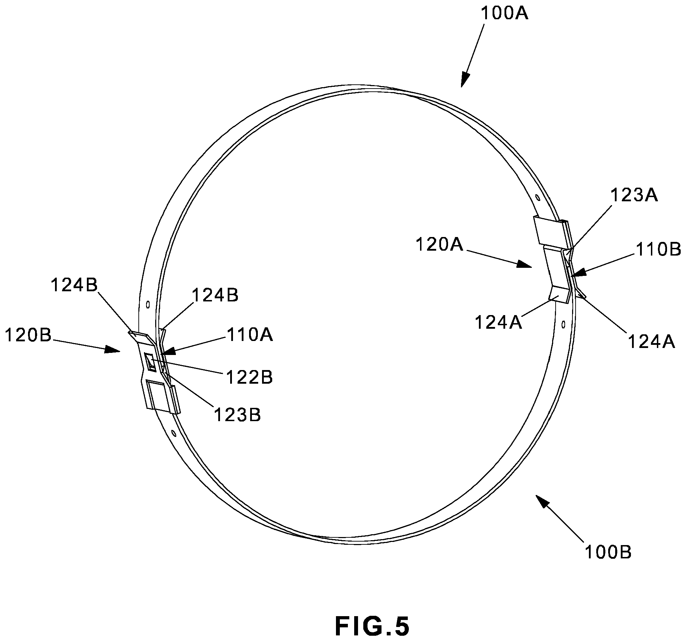

FIG. 5 shows a perspective view of the first coupling band 100A being mated with the second coupling band 100B. To mate the first coupling band 100A to the second coupling band 100B, the male end 110A of the first coupling band 100A is inserted into the coupling chamber 123B of the second coupling band 100B. The guide flanges 124B provide a tapering design to help aid the male end 110A into the coupling chamber 123B. Once inside the coupling chamber 123B, the lock window 112A of the first coupling band 100A is pushed until the locking tab 122B of the second coupling band 100B falls down into the lock window 112A to form a mating structure. Similarly on the other end, the male end 110B of the second coupling band 100B is inserted into the coupling chamber 123A of the first coupling band 100A. The guide flanges 124A provide a tapering design to help aid the male end 110B into the coupling chamber 123A. The mated assembly of the first coupling band 100A and the second coupling band 100B may be installed into the channels 201 formed in the half sleeves 200A, 200B illustrated in FIG. 1.

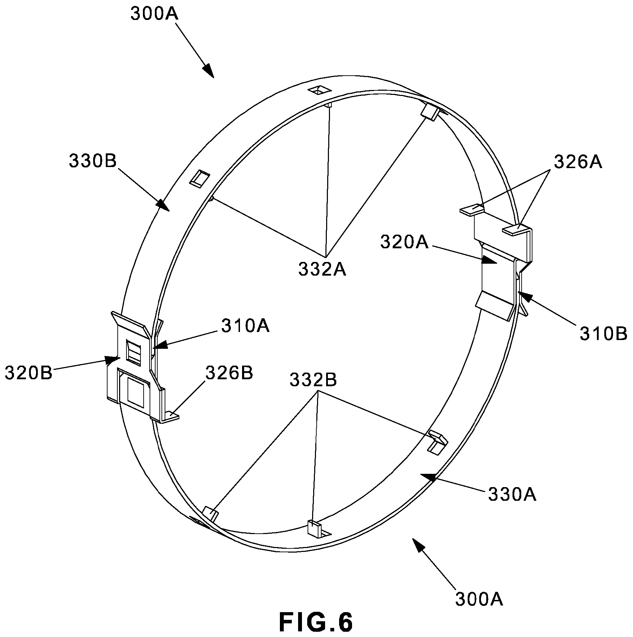

According to an alternative second embodiment, FIG. 6 shows another coupling band 300 with similar design features as the coupling band 100, where the coupling bands 300 are also configured to be installed into the channels 201 of the half sleeves 200A, 200B. For example, the mating features in a male end 310 of the coupling band 300 are the same as the coupling features in the male end 110 of the coupling band 100. Accordingly, the mating features in a female end 320 of the coupling band 300 are the same as the coupling features in the female end 120 of the coupling band 100. In addition to these features, the coupling bands 300A, 300B further include barbs 332A, 332B on an underside of the body 330A, 330B of the coupling bands 300A, 300B. Furthermore, the female ends 320A, 320B may also include barbs 326A, 326. These barbs 332A, 332B, 326A, 326B work to pick into a surface of the channels 201 formed in the half sleeves 200A, 200B to provide a stronger gripping strength, which may assist in providing a stronger mating structure of the mated coupling bands 300A, 300B to hold together the half sleeves 200A, 200B.

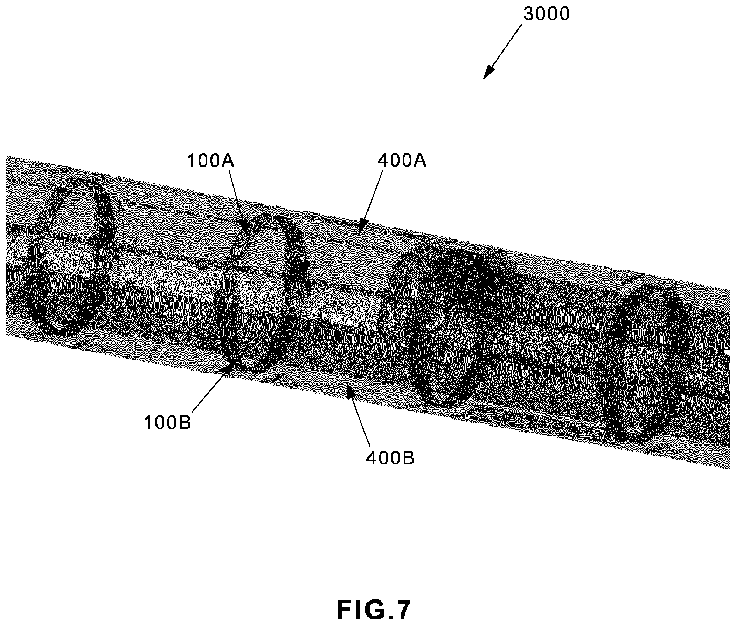

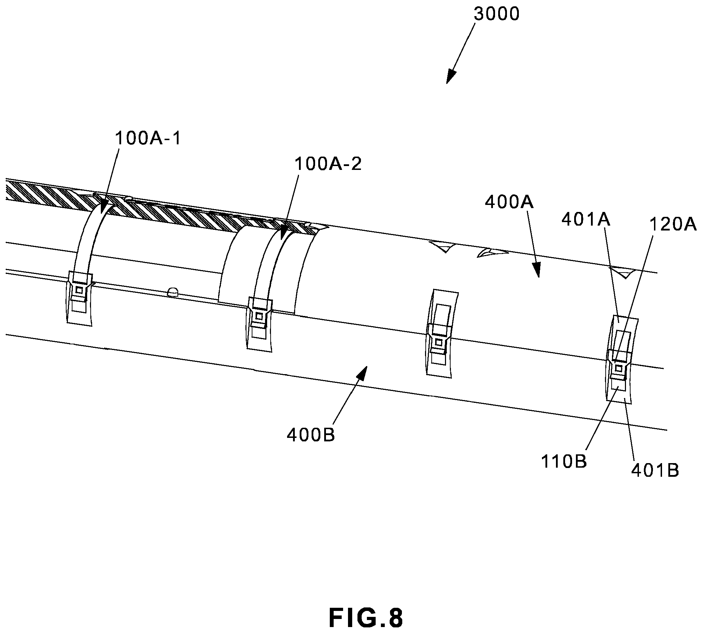

FIGs. 7 and 8 show an alternative third embodiment of a cable protection system 3000 where the same coupling bands 100A, 100B are now embedded within the half sleeves 400A, 400B. The coupling bands 100A, 100B may be embedded within the half sleeves 400A, 400B during a molding process of the half sleeves 400A, 400B. As shown in FIG. 8 for exemplary purposes, the portion of the top side half sleeve 400A around the coupling band 100A-2 is depicted without a top portion of the material to illustrate how the coupling band 100A-2 is embedded inside the material of the top side half sleeve 400A to be surrounded by the material during the molding process of the top side half sleeve 400A. The portion of the top side half sleeve 400A around the coupling band 100A-1 is depicted without any material to further illustrate how the coupling band 100A-1 is embedded inside the material of the top side half sleeve 400A to be surrounded by the material during the molding process of the top side half sleeve 400A.

As further shown in FIG. 8, the top side half sleeve 400A may include a mating cavity 401A for exposing the female end 120A of the first coupling band 100A, and the bottom side half sleeve 400B may include a corresponding mating cavity 401B for exposing the male end 110B of the second coupling band 100B. The mating cavities 401A, 401B allows a space for an installer to mate the two coupling bands 100A, 100B and confirm the mating structure is maintained. Although not shown, the same mating cavities are provided on the opposite side of the half sleeves 400A, 400B to mate the opposite ends of the coupling bands 100A, 100B as described.

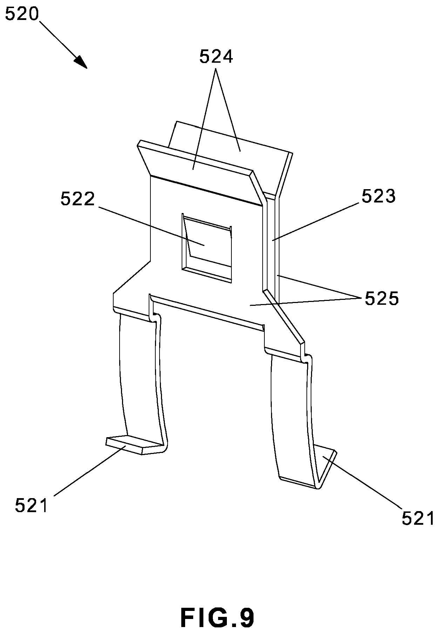

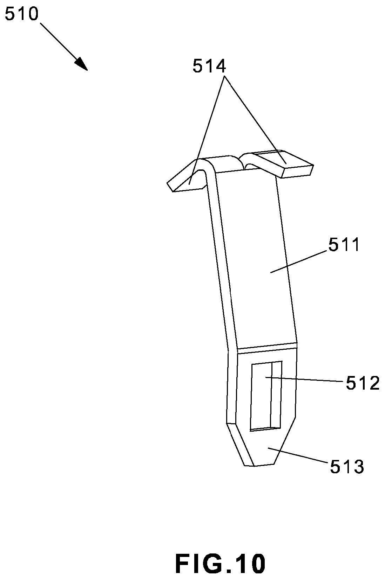

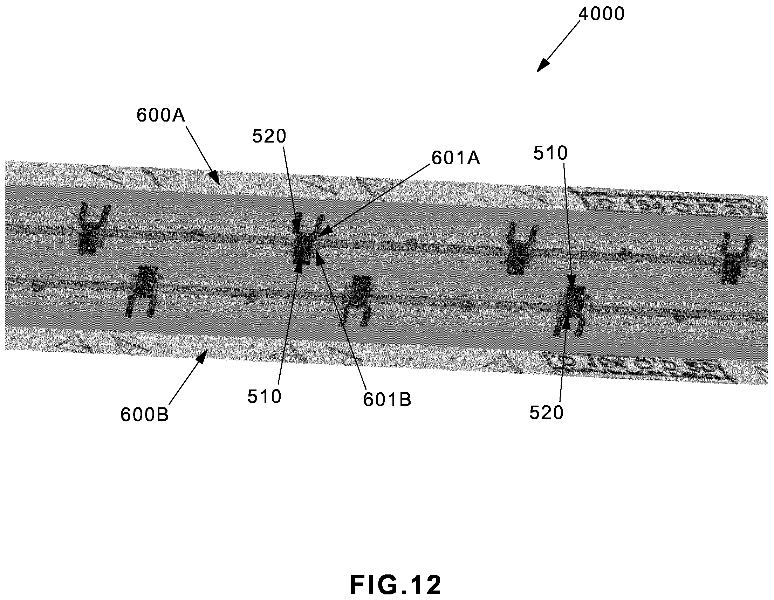

FIG. 12 shows a cable protection system 4000 according to a fourth embodiment. FIG. 9 shows a female anchor 520 according to the cable protection system 4000, and FIG. 10 shows a male anchor 510 for mating with the female anchor 520 of the cable protection system 4000. The female anchor 520 is designed to be embedded within a first side of a half sleeve 600A, 600B while the male anchor 510 is designed to be embedded to the opposite second side of the half sleeve 600A, 600B, as shown in FIG. 12. The female anchor 520 and the male anchor 510 are configured to be embedded alone into the half sleeves 600A, 600B without including a band body as provided in earlier described embodiments.

The mating features of the female anchor 520 are the same as described for the female end 120 of the coupling band 100. For example, FIG. 9 shows that the female anchor 520 also includes a coupling chamber 523 defined by two female body walls 525, a locking tab 522, and a pair of guide flanges 524 that are formed to flare out from a distal end of the body walls 525. In addition, and to help retain the female anchor 520 embedded within the half sleeves 600A, 600B, the female anchor 520 additionally introduces barbs 521 for being embedded within the half sleeves 600A, 600B.

The mating features of the male anchor 510 are the same as described for the male end 110 of the coupling band 100. For example, FIG. 10 shows that the male anchor 510 also includes a male body 511 portion, and a tapered entry tip 513, and a lock window 512 opening. In addition, and to help retain the male anchor 510 embedded within the half sleeves 600A, 600B, the male anchor 510 additionally introduces barbs 514 for being embedded within the half sleeves 600A, 600B.

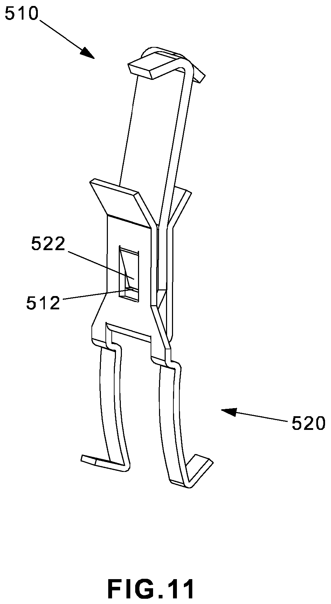

FIG. 11 shows the female anchor 520 and the male anchor 510 mated together in a mated assembled state. Same as in the mating process of the coupling band 100, the male anchor 510 is inserted into the coupling chamber 523 of the female anchor 520, as guided by the guide flanges 524. The male anchor 510 travels within the coupling chamber 523 until the locking tab 522 falls into the cavity of the lock window 512, thus creating the mating structure.

As shown by the semi-transparent view of the cable protection system 4000 in FIG. 12, the half sleeves 600A, 600B include mating windows 601A, 601B for exposing the mating features of the female anchor 520 and the male anchor 510. The mating windows 601A, 601B are included on opposite sides of the half sleeves 600A, 600B and may assist an installer to mate the female anchor 520 and the male anchor 510 together and confirm the mating structure is maintained.

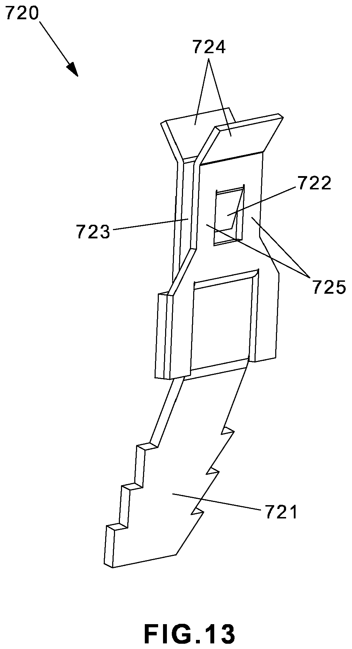

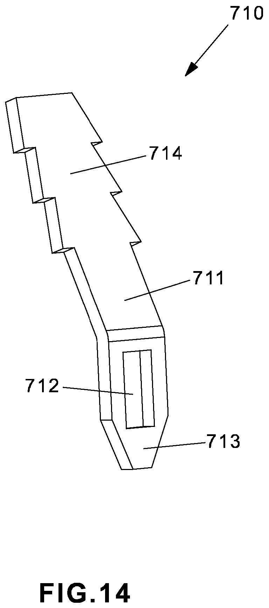

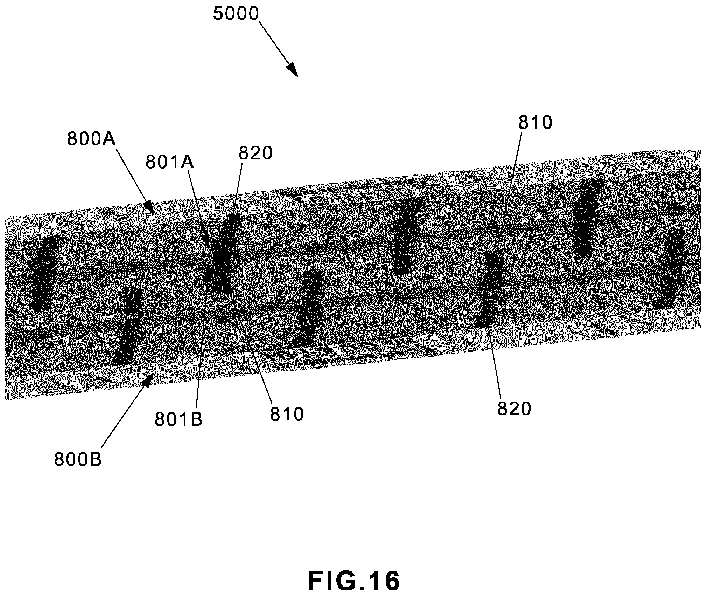

FIG. 16 shows a perspective view of a cable protection system 5000 according to a fifth embodiment. FIG. 13 shows a female anchor 720 of the cable protection system 5000, and FIG. 14 shows a male anchor 710 for mating with the female anchor 720 of the cable protection system 5000. The female anchor 720 is designed to be embedded within a first side of a half sleeve 800A, 800B while the male anchor 710 is designed to be embedded to the opposite second side of the half sleeve 800A, 800B, as shown in FIG. 16. The female anchor 720 and the male anchor 710 are configured to be embedded alone into the half sleeves 800A, 800B without including a band body as provided in earlier described embodiments.

The mating features of the female anchor 720 are the same as described for the female end 120 of the coupling band 100. For example, FIG. 13 shows that the female anchor 720 also includes a coupling chamber 723 defined by two female body walls 725, a locking tab 722, and a pair of guide flanges 524 that are formed to flare out from a distal end of the body walls 725. In addition, and to help retain the female anchor 720 embedded within the half sleeves 800A, 800B, the female anchor 720 additionally includes sawtooth barbs 721 for being embedded within the half sleeves 800A, 800B.

The mating features of the male anchor 710 are the same as described for the male end 110 of the coupling band 100. For example, FIG. 14 shows that the male anchor 710 also includes a male body 711 portion, and a tapered entry tip 713, and a lock window 712 opening. In addition, and to help retain the male anchor 710 embedded within the half sleeves 800A, 800B, the male anchor 710 additionally includes sawtooth barbs 714 for being embedded within the half sleeves 800A, 800B.

FIG. 16 shows the female anchor 720 and the male anchor 710 mated together in a mated assembled state. Same as in the mating process of the coupling band 100, the male anchor 710 is inserted into the coupling chamber 723 of the female anchor 720, as guided by the guide flanges 724. The male anchor 710 travels within the coupling chamber 723 until the locking tab 722 falls into the cavity of the lock window 712, thus creating the mating structure.

As shown by the semi-transparent view of the cable protection system 5000 in FIG. 16, the half sleeves 800A, 800B include mating windows 801A, 801B for exposing the mating features of the female anchor 820 and the male anchor 810. The mating windows 801A, 801B are included on opposite sides of the half sleeves 800A, 800B and may assist an installer to mate the female anchor 720 and the male anchor 710 together, and confirm the mating structure is maintained.

FIGs. 17-19 show the cable protection system 2000 in various stages of an installation process, according to an exemplary embodiment. Although the coupling features may be different, the basic steps of the installation process map be applied to the different embodiments of the cable protection systems described herein.

In FIG. 17, a half-length half sleeve 400C is shown that includes the embedded coupling band 300. The installation process may begin with the half-length half sleeve 400C so that subsequent full-length half sleeves 400A, 400B that are installed into the assembly will be installed with an offset, where having the offset configuration provides additional stability and structural integrity to the overall cable protection system.

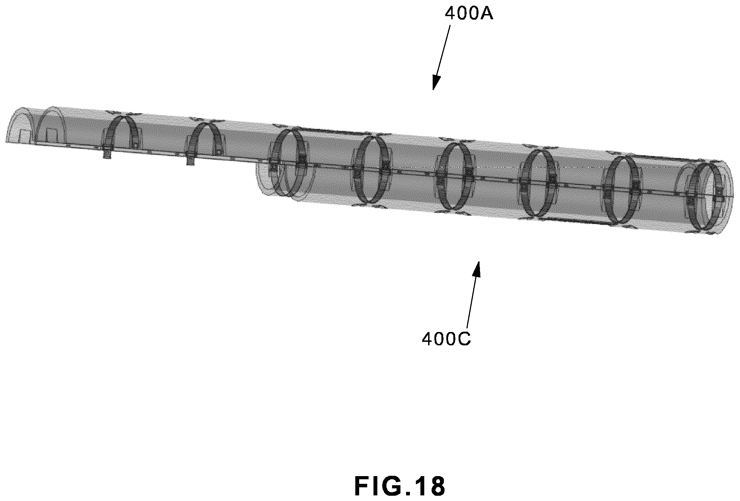

FIG. 18 shows a full-length half sleeve 400A installed on top of the half-length half sleeve 400C, thus now showing the beginning of the offset configuration.

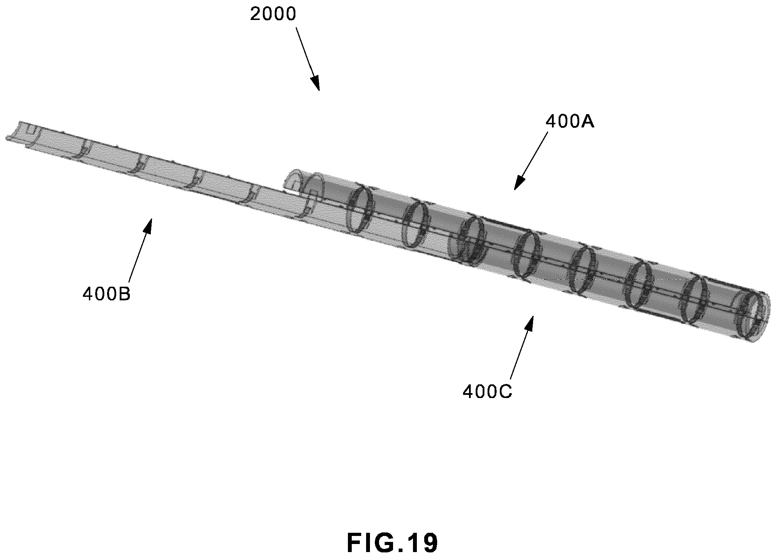

FIG. 19 shows a full-length half sleeve 400B installed adjacent to the half-length half sleeve 400C, such that a portion of the full-length half sleeve 400B and the half-length half sleeve 400C are positioned under the full-length half sleeve 400A. So, by utilizing the half-length half sleeve 400C at the beginning and/or ends of the cable protection system 2000, the installation may achieve the offset configuration of the cable protection system 2000. This installation process may continue to protect a desired length of cable that fits within the cavity formed by the opposing half sleeves coming together. As a final step, a final half-length half sleeve may be installed to cap off the end of the cable protection system 2000.

These mating features of the cable protection systems described herein are utilized to provide an effective and efficient installation for assembling the half sleeves around a cable to be protected. For example, each of the half sleeves used in the disclosed cable protection systems may include one or more (e.g., a plurality) of the coupling fasteners described herein to provide a strong mating structure for maintaining the half sleeves around the cable.

The present disclosure thus describes cable protection systems and methods for installing such cable protection systems as described above. As is readily apparent from the foregoing, various non-limiting embodiments of the systems, devices, and methods have been described. While various embodiments have been illustrated and described herein, they are exemplary only and it is not intended that these embodiments illustrate and describe all those possible. Instead, the words used herein are words of description rather than limitation, and it is understood that various changes may be made to these embodiments without departing from the scope of the following claims.

## Claims

1. A cable protection sleeve comprising:
a first half sleeve;
a second half sleeve configured to mate with the first half sleeve to form a mated sleeve, the mated sleeve including an internal cavity for holding a cable;
a first coupling band fastener; and
a second coupling band fastener configured to mate with the first coupling band fastener around the mated sleeve.

2. The cable protection sleeve of claim 1, wherein the first coupling band fastener includes a female end, a male end, and a band body.

3. The cable protection sleeve of claim 2, wherein at least one of the female end, the male end, of the band body includes one or more barbs.

4. The cable protection sleeve of any preceding claim, wherein the second coupling band fastener includes a female end, a male end, and a band body.

5. The cable protection sleeve of claim 4, wherein at least one of the female end, the male end, of the band body includes one or more barbs.

6. The cable protection sleeve of any preceding claim, wherein at least one of:
the first coupling band fastener includes a first female end, a first male end, and a first band body, and
the second coupling band fastener includes a second female end, a second male end, and a second band body, wherein the first female end is configured to mate with the second male end, and the second female end is configured to mate with the first male end; or
the first coupling band fastener is embedded, at least in part, within the first half sleeve, and
the second coupling band fastener is embedded, at least in part, within the second half sleeve.

7. The cable protection sleeve of any preceding claim, further comprising:
a third sleeve having a length that is less than a length of the first half sleeve and less than a length of the second half sleeve, wherein the first half sleeve and the first half sleeve have a same length.

8. A cable protection sleeve comprising:
a first half sleeve including a male coupling fastener embedded into the first half sleeve; and
a second half sleeve including a female coupling fastener embedded into the second half sleeve, the second half sleeve configured to mate with the first half sleeve by mating the male coupling fastener to the female coupling fastener, wherein the mated first half sleeve and the second half sleeve form a mated sleeve including an internal cavity for holding a cable.

9. The cable protection sleeve of claim 8, wherein at least one of:
the male coupling fastener includes one or more barbs;
the female coupling fastener includes one or more barbs;
the male coupling fastener includes sawtooth barbs; or
the female coupling fastener includes sawtooth barbs.

10. The cable protection sleeve of any of claims 8 to 9, further comprising:
a third sleeve having a length that is less than a length of the first half sleeve and less than a length of the second half sleeve, wherein the first half sleeve and the first half sleeve have a same length.

11. Use of the cable protection sleeve of any preceding claim in a subsea installation.

12. A method of manufacturing a cable protection sleeve, the method comprising:
providing a first half sleeve;
providing a second half sleeve configured to mate with the first half sleeve to form a mated sleeve, the mated sleeve including an internal cavity for holding a cable;
providing a first coupling band fastener; and
providing a second coupling band fastener configured to mate with the first coupling band fastener around the mated sleeve.

13. A method of manufacturing a cable protection sleeve, the method comprising:
providing a first half sleeve including a male coupling fastener embedded into the first half sleeve; and
providing a second half sleeve including a female coupling fastener embedded into the second half sleeve, the second half sleeve configured to mate with the first half sleeve by mating the male coupling fastener to the female coupling fastener,
wherein the mated first half sleeve and the second half sleeve form a mated sleeve including an internal cavity for holding a cable.

14. A method of installing a cable protection sleeve, the method comprising:
providing a first half sleeve;
mating a second half sleeve with the first half sleeve to form a mated sleeve, the mated sleeve including an internal cavity for holding a cable;
providing a first coupling band fastener; and
mating a second coupling band fastener with the first coupling band fastener around the mated sleeve.

15. A method of installing a cable protection sleeve, the method comprising:
providing a first half sleeve including a male coupling fastener embedded into the first half sleeve;
providing a second half sleeve including a female coupling fastener embedded into the second half sleeve; and
mating the second half sleeve with the first half sleeve by mating the male coupling fastener to the female coupling fastener,
wherein the mated first half sleeve and the second half sleeve form a mated sleeve including an internal cavity for holding a cable.
